# EUROPEAN PATENT APPLICATION

(11) **EP 4 032 647 A1**
(43) Date of publication of application: **27.07.2022**
(21) Application number: 20868994.3
(22) Date of filing: 16.09.2020
(51) Int. Cl.: B23K 1/00, C22C 9/02, C22C 13/00, F28D 7/00, B23K 35/26, B23K 35/30

(54) **HEAT EXCHANGER**

(30) Priority: 26.09.2019 JP 2019175363
(71) Applicant: Daikin Industries, Ltd., Osaka-shi, Osaka 530-8323 (JP)
(72) Inventor: KIKUNO, Tomonori, Osaka-shi, Osaka 530-8323 (JP); SUETAKE, Itsuki, Osaka-shi, Osaka 530-8323 (JP)
(74) Representative: Hoffmann Eitle
(86) International application number: PCT/JP2020/035060
(87) International publication number: WO 2021/060103

(57) **Abstract**

A heat exchanger (1) includes: a first metal tube (20); a second metal tube (30); and a metallic joint (J) made of a joint material molten and then solidified to join the first metal tube (20) and the second metal tube (30) together. The heat exchanger (1) is configured to allow a fluid flowing through the first metal tube (20) to exchange heat with a fluid flowing through the second metal tube (30). The joint (J) of the heat exchanger (1) contains copper. The melting temperature of the joint (J) is higher than the annealing temperature of the first and second metal tubes (20) and (30). The tensile strength of the first and second metal tubes (20) and (30) is greater than a metal tube with a temper designation "O."

## Description

### TECHNICAL FIELD

The present disclosure relates to a heat exchanger.

### BACKGROUND ART

A heat exchanger including a core tube and a coiled tube has been known in the art. This heat exchanger has its coiled tube helically coiled around the core tube. This heat exchanger allows a fluid flowing through the core tube to exchange heat with a fluid flowing through the coiled tube. Such a heat exchanger has its core tube and its coiled tube joined together by soldering or brazing.

Patent Document 1 discloses a method for manufacturing a heat exchanger including a core tube and a coiled tube. The manufacturing method of Patent Document 1 includes a coiling step of helically coiling the coiled tube around the core tube, a heating step of heating a region of a portion of the core tube around which the coiled tube has been coiled, and a joining step of joining the core tube and the coiled tube together by supplying solder between the core tube and the coiled tube that have been heated. After the joining step, the supplied solder is cooled to solidify, thereby forming a joint. The heat exchanger of Patent Document 1 provides sufficiently high thermal conductivity through this joint between its core tube and its coiled tube.

### CITATION LIST

### PATENT DOCUMENTS

Patent Document 1: Japanese Unexamined Patent Publication No. 2011-224657

### SUMMARY

### TECHNICAL PROBLEM

Many types of solder for use as a joint material for a heat exchanger contain 95% or more of tin. The thermal conductivity of tin is as low as about 64 W/m·K. Thus, a heat exchanger that includes such solder as described above as a joint material has a joint containing a high proportion of tin, resulting in low heat exchange efficiency between its core tube and its coiled tube.

It is an object of the present disclosure to improve the heat transfer coefficient of a joint of a heat exchanger.

### SOLUTION TO THE PROBLEM

A first aspect of the present disclosure is directed to a heat exchanger (1) including: a first metal tube (20); a second metal tube (30); and a metallic joint (J) made of a joint material molten and then solidified to join the first metal tube (20) and the second metal tube (30) together. The heat exchanger (1) is configured to allow a fluid flowing through the first metal tube (20) to exchange heat with a fluid flowing through the second metal tube (30). The joint (J) contains copper. A melting temperature of the joint (J) is higher than an annealing temperature of the first and second metal tubes (20) and (30). A tensile strength of the first and second metal tubes (20) and (30) is greater than a tensile strength of a metal tube with a temper designation "O."

Copper has a thermal conductivity as high as about 370 W/m·K. According to the first aspect, the joint (J) contains copper. This can improve the heat transfer coefficient of the joint (J) of the heat exchanger (1).

A second aspect of the present disclosure is an embodiment of the first aspect. In the second aspect, the joint material contains copper particles with a particle size of 1 µm or less, and a melting temperature of the joint material is lower than the annealing temperature of the first and second metal tubes (20) and (30).

Copper containing copper particles with a particle size of 1 µm or less has a lower melting temperature than copper that does not contain the copper particles. According to the second aspect, the joint material is molten at a temperature lower than the annealing temperature of the first and second metal tubes (20) and (30), thereby forming the joint (J).

A third aspect of the present disclosure is an embodiment of the first or second aspect. In the third aspect, the joint material contains tin.

Tin has a lower melting temperature and a lower price than other metals. According to the third aspect, the joint material can have its melting temperature lowered while having its price reduced.

A fourth aspect of the present disclosure is an embodiment of any one of the first to third aspects. In the fourth aspect, the joint (J) has a void fraction of 30% or less by volume.

According to the fourth aspect, the void fraction of the joint (J) is not high. Thus, the strength of the joint (J) can be maintained.

### BRIEF DESCRIPTION OF THE DRAWINGS

FIG. 1 is a general view illustrating a configuration of a heat exchanger according to an embodiment.
FIG. 2 is an enlarged perspective view illustrating a major portion of the heat exchanger.
FIG. 3 is an enlarged cross-sectional view of a major portion of the heat exchanger.
FIG. 4 is a graph showing the relationship between the rate of temperature rise and the void fraction at a joint.

### DESCRIPTION OF EMBODIMENTS

An embodiment will be described. A heat exchanger (1) of this embodiment constitutes a water heat exchanger for use in, for example, a heat pump hot water supply apparatus.

### - Heat Exchanger -

The heat exchanger (1) of this embodiment includes a core tube (20) and coiled tubes (30). The core tube (20) and each coiled tube (30) are joined together with a metallic joint (J). The heat exchanger (1) allows a fluid flowing through the core tube (20) to exchange heat with a fluid flowing through the coiled tubes (30).

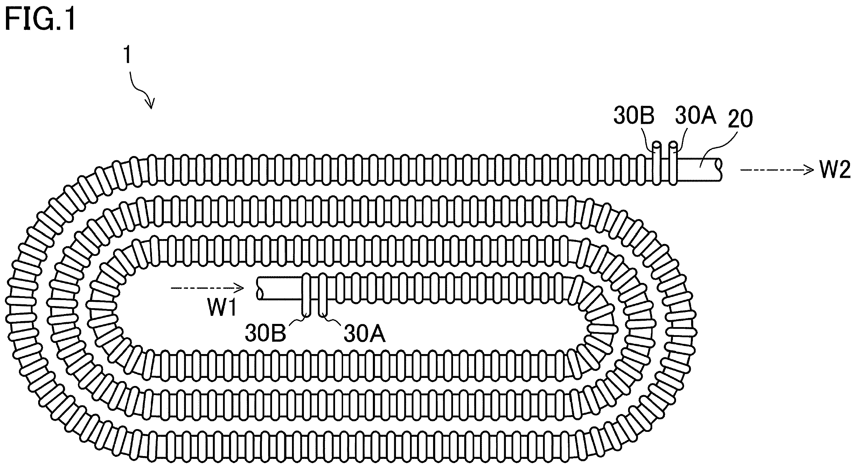

As illustrated in FIG. 1, the heat exchanger (1) has its coiled tubes (30) coiled around the core tube (20). The heat exchanger (1) has its core tube (20) bent into an oblong scroll pattern. The core tube (20) is a first metal tube, and the coiled tubes (30) are second metal tubes.

### <Core Tube>

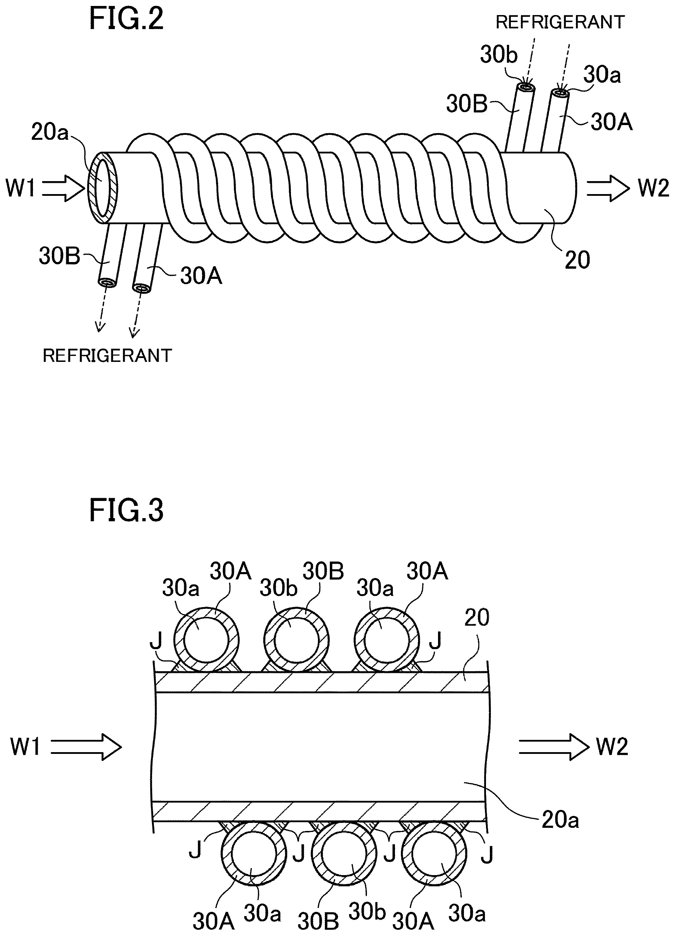

The core tube (20) is a circular tube made of copper. As illustrated in FIG. 2, the core tube (20) has therein a water passage (20a) having a circular cross section and intended to allow water to pass therethrough. The core tube (20) has a predetermined length and a predetermined diameter. The tensile strength of the core tube (20) of this embodiment is greater than the tensile strength corresponding to temper designation "O." The "temper designation" as used herein is a designation specified in the Japanese Industrial Standard (JIS). For example, the temper of a copper material refers to the condition of the material that has undergone necessary treatment to impart a specific physical or mechanical property to wrought copper products, as specified in JIS H 0500.

The temper designation "O" represents the condition of the material completely recrystallized or annealed and having the lowest tensile strength. Examples of temper designations of a copper tube having a higher tensile strength than a copper tube with temper designation "O" include 1/8H, 1/4H, and 1/2H (see JIS H 0500). The temper designation "1/8H" of the copper tube means the condition of the copper tube that has been work-hardened so that its tensile strength is intermediate between that of a copper tube with temper designation "O" and that of a copper tube with temper designation "1/4H," the temper designation "1/4H" of the copper tube means the condition of the copper tube that has been work-hardened so that its tensile strength is intermediate between that of a copper tube with temper designation "1/8H" and that of a copper tube with temper designation "1/2H," and the temper designation "1/2H" of the copper tube means the condition of the copper tube that has been work-hardened so that its tensile strength is intermediate between that of a copper tube with temper designation "1/4H" and that of a copper tube with temper designation "3/4H" (see JIS H 0500).

### <Coiled Tube>

As illustrated in FIG. 2, the heat exchanger (1) of this embodiment has its two coiled tubes (30A, 30B) coiled around the core tube (20). The first and second coiled tubes (30A) and (30B) are coiled around the core tube (20) while being parallel to each other, and form a double helix extending along the center axis of the core tube (20). As illustrated in FIG. 3, the first and second coiled tubes (30A) and (30B) are circular tubes made of copper. The coiled tubes (30) each have an outside diameter and an inside diameter that are respectively smaller than those of the core tube (20).

The first coiled tube (30A) has therein a first refrigerant passage (30a) having a circular cross section and intended to allow water to pass therethrough. Likewise, the second coiled tube (30B) also has therein a second refrigerant passage (30b) having a circular cross section and intended to allow water to pass therethrough.

As with the core tube (20), the tensile strength of each coiled tube (30) of this embodiment is greater than the tensile strength corresponding to temper designation "O" specified in JIS H 0500. Examples of temper designations of a copper tube having a higher tensile strength than a copper tube with temper designation "O" as used herein include 1/8H, 1/4H, and 1/2H (see JIS H 0500).

### <Joint Material>

A molten joint material is supplied between the core tube (20) and the coiled tubes (30), and is then cooled to solidify, thereby forming the joint (J). The joint material will be hereinafter described.

The joint material contains at least copper powder, copper particles with a particle size of 1 µm or less (hereinafter referred to as the "copper microparticles"), and low-melting metal powder. The joint material may contain a solvent serving to adjust its viscosity. The joint material may contain an activator serving to remove oxygen atoms contained in the joint material.

The copper microparticles are copper particles with a particle size of 1 µm or less. The particle size of the copper microparticles ranges preferably from 1 nm to 1 µm and more preferably from 1 nm to 500 nm.

The particle size as used herein refers to the particle size of primary particles. The particle size of the primary particles means the diameter of primary particles, which are microparticles of individual metals or any other individual materials forming a secondary particle. The primary particle size is a value measured using an electron microscope. The primary particle size is the diameter of primary particles each including a coated material deposited on the surface of the primary particle as well as a core portion containing metallic element microparticles.

There is a known tendency for each of metal microparticles that have their particle size reduced to the order of nanometers to contain less constituent atoms and to have its surface area sharply increased relative to its volume. This causes the melting point and sintering temperature of the metal microparticles to be respectively lower than the melting point and sintering temperature of metal in a bulk state (the state where lowering of melting point is not apparently observed depending on the particle size of the metal microparticles). The metal microparticles each having a particle size of 100 nm or less make this tendency apparent. In particular, the metal microparticles each having a particle size of about 10 nm to 20 nm have their surfaces molten even at a temperature considerably lower than the melting point of the metal in the bulk state, and are thus sintered together. The property of lowering the melting point of the metal microparticles allows the joint material containing the metal microparticles to melt at a low temperature while being heated, and allows an alloy with a high melting point to be formed at the joint (J) obtained by solidifying the joint material.

Copper forming the copper powder has a melting point of about 1085°C while being in the bulk state. The melting temperature of copper in the form of copper microparticles is about 300°C. The melting temperature of copper in the form of copper microparticles is lower than the annealing temperature of the core tube (20) and the coiled tubes (30) of this embodiment, i.e., about 400°C to 600°C.

The low-melting metal powder is metal powder made of metal or alloy dispersed in the joint material. The low-melting metal powder is metal powder made of metal or alloy having a melting point that is lower than the annealing temperature of the core tube (20) and the coiled tubes (30) while being in the bulk state. The low-melting metal powder molten forms alloy together with the entirety or a portion of copper that can be diffused from the surfaces of the copper microparticles during heat joining, thereby forming the joint (J).

During heat joining, the low-melting metal powder is molten at a temperature at which typical solder is molten. Thus, the low-melting metal powder is made of metal or alloy that has a melting point of 400°C or less while being in the bulk state. The low-melting metal powder together with copper can form alloy. Specifically, in one preferred embodiment, the low-melting metal powder is tin metal powder that enables joining between materials at a low temperature, or tin alloy powder containing tin with which at least one selected from copper, silver, phosphorus, aluminum, and bismuth is dissolved. In addition, in one preferred embodiment, the low-melting metal powder has a particle size that allows the low-melting metal powder to be quickly molten during heat joining. Specifically, the particle size of the low-melting metal powder is preferably greater than 500 nm and less than or equal to 50 µm, and more preferably greater than 1 µm and less than or equal to 50 µm.

In addition, in one preferred embodiment, as with the low-melting metal powder, copper powder also has a particle size that allows the copper powder to be quickly molten during heat joining. Specifically, the particle size of the copper powder is preferably greater than 500 nm and less than or equal to 50 µm, and more preferably greater than 1 µm and less than or equal to 50 µm.

In summary, the joint material contains copper microparticles, copper, and tin serving as low-melting metal powder, and has a melting temperature that is lower than the annealing temperature of the core tube (20) and the coiled tubes (30).

The content of the copper microparticles in the joint material ranges preferably from 0.5% by mass to 80% by mass, and more preferably from 1% by mass to 30% by mass. If the proportion of the copper microparticles is less than 0.5% by mass, the melting point of a resultant joint layer may less effectively increase. On the other hand, if the proportion of the copper microparticles exceeds 80% by mass, the copper microparticles may aggregate, resulting in insufficient formation of an alloy layer containing the copper microparticles and the low-melting metal powder.

The proportion of the amount of metal as a combination of the copper microparticles and the low-melting metal powder in the joint material ranges preferably from 5% by mass to 95% by mass and more preferably from 30% by mass to 90% by mass. If this proportion of the amount of metal is less than 5% by mass, the joint layer may have a nonuniform thickness. This may cause cracks and voids. On the other hand, if this proportion of the amount of metal exceeds 95% by mass, the reduction performance of the activator may decrease, and the formed joint may thus have inadequate strength. It is recommended that the proportion of the copper microparticles and the low-melting metal powder depend on the type of alloy or metal to be formed.

### <Joint>

A molten joint material solidifies to form the joint (J). Specifically, as illustrated in FIG. 3, the joint (J) is formed to fill the gap between the core tube (20) and the associated coiled tube (30), and is in close contact with the outer surfaces of the core tube (20) and the coiled tube (30) to join the core tube (20) and the coiled tube (30) together. The joint (J) is an alloy containing copper and tin.

When the core tube (20) and the coiled tubes (30) are heated so as to be joined together, the copper microparticles dissolve in the copper powder and the low-melting metal powder, and disappear from the joint (J). This disallows the joint (J) to obtain the advantage of the lowering of the melting point of the copper microparticles. Thus, the melting temperature of the joint (J) is higher than the annealing temperature of the core tube (20) and the coiled tubes (30).

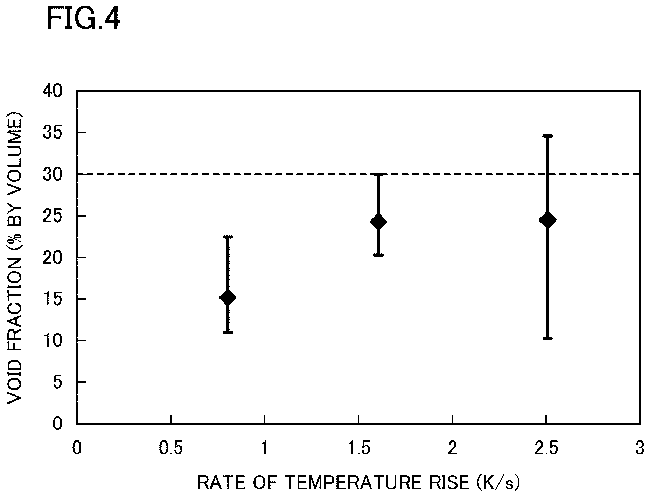

Changing joining conditions, such as the rate of temperature rise and heating temperature of the joint material and the period during which the heating temperature is maintained, allows the joint (J) to have a joint layer with a void fraction of 30% by volume. As shown in FIG. 4, investigations of the void fractions of joints (J) of this embodiment respectively formed at rates of temperature rise of about 0.8 K/s, about 1.5 K/s, and 2.5 K/s showed that the average void fractions (the diamond marks in FIG. 4) of the joints (J) formed at all of these rates of temperature rise were less than or equal to 30% by volume.

### - Operation of Heat Exchanger -

Next, an operation of the heat exchanger (1) will be described.

As illustrated in FIG. 1, water (W1) for hot water supply flows from one end of the core tube (20) into the water passage (20a) of the heat exchanger (1). Then, the water (W1) flows through the water passage (20a) in the core tube (20). Heat of a high-temperature refrigerant (for example, CO₂) flowing through each of the first and second refrigerant passages (30a) and (30b) is transferred to an associated one of the first and second coiled tubes (30A) and (30B), the joint (J), the core tube (20), and the water (W1) flowing through the water passage (20a) in this order. As a result, the water (W1) is heated to have its temperature efficiently increased. The water (W1) heated while flowing through the water passage (20a) is supplied, as hot water (W2) with a desired temperature, from the other end of the core tube (20) to the outside.

### - Method for Manufacturing Heat Exchanger -

Next, a method for manufacturing the heat exchanger (1) will be described.

First, in a coiling step, coiled tubes (30) are helically coiled around a core tube (20) so as to be combined with the core tube (20).

Next, a molten joint material formation step is performed. In the molten joint material formation step, a joint material is heated to its melting temperature or higher so as to be molten, thereby forming a molten joint material. The melting temperature of the resultant joint material at this time is lower than the annealing temperature of the core tube (20) and the coiled tubes (30).

Next, a joint material supplying step is performed. In the joint material supplying step, the molten joint material is supplied between the core tube (20) and the coiled tube (30).

Next, a joining step is performed. In the joining step, the molten joint material supplied between the core tube (20) and the coiled tubes (30) is cooled to solidify, thereby forming a joint (J).

### - Feature (1) of Embodiment -

The heat exchanger (1) of this embodiment includes the core tube (20), the coiled tubes (30), and the metallic joint (J) made of the joint material molten and then solidified to join the core tube (20) and the coiled tubes (30) together, and allows a fluid flowing through the core tube (20) to exchange heat with a fluid flowing through the coiled tubes (30). The joint (J) of the heat exchanger (1) contains copper, and has a melting temperature that is higher than the annealing temperature of the core tube (20) and the coiled tubes (30). The tensile strength of the core tube (20) and the coiled tubes (30) is greater than that of such tubes with temper designation "O."

Copper has a thermal conductivity as high as about 370 W/m·K. The joint (J) of the heat exchanger (1) of this embodiment contains copper. This allows the joint (J) of the heat exchanger (1) to have a higher heat transfer coefficient than typical solder.

### - Feature (2) of Embodiment -

The joint material of the heat exchanger (1) of this embodiment contains copper particles with a particle size of 1 µm or less, and has a melting temperature that is lower than the annealing temperature of the core tube (20) and the coiled tubes (30).

Copper containing copper particles with a particle size of 1 µm or less has a lower melting temperature than copper that does not contain the copper particles. The joint material is molten at a temperature lower than the annealing temperature of the core tube (20) and the coiled tubes (30), thereby forming the joint (J) of the heat exchanger (1) of this embodiment.

For example, if the core tube (20) and the coiled tubes (30) are joined together by brazing with a phosphor-copper brazing filler metal containing a high proportion of copper, the joint (J) containing a high proportion of copper is formed. This increases the heat transfer coefficient of the joint (J). However, joining the core tube (20) and the coiled tubes (30) together at the melting temperature of the brazing filler metal, which is higher than or equal to 800°C, causes the core tube (20) and the coiled tubes (30) to be annealed. This reduces the tensile strength of the core tube (20) and the coiled tubes (30).

In contrast, the joint material forming the joint (J) of this embodiment contains copper particles with a particle size of 1 µm or less, and has a melting temperature of about 300°C. In the process in which the joint material is molten to form the joint (J), the temperatures of the core tube (20) and the coiled tubes (30) are kept below the annealing temperature of these tubes. Thus, the joint (J) with a high heat transfer coefficient can be formed without reducing the tensile strength of the core tube (20) and the coiled tubes (30).

### - Feature (3) of Embodiment -

The joint material of the heat exchanger (1) of this embodiment contains tin.

Tin has a lower melting temperature and a lower price than other metals. The joint material of the heat exchanger (1) of this embodiment can have its melting temperature lowered while having its price reduced.

### - Feature (4) of Embodiment -

The joint (J) of the heat exchanger (1) of this embodiment has a void fraction of 30% or less by volume.

The void fraction of the joint (J) of the heat exchanger (1) of this embodiment is not high. Thus, the strength of the joint (J) can be maintained.

### <<Other Embodiments>>

The foregoing embodiment may also be configured as follows.

The core tube (20) and the coiled tubes (30) of the heat exchanger (1) of the foregoing embodiment may be made of stainless steel. In this case, the tensile strength of the core tube (20) and the coiled tubes (30) is greater than the tensile strength corresponding to temper designation "O." The "temper designation" as used herein is a designation specified in the JIS G 4313.

While the embodiments and variations thereof have been described above, it will be understood that various changes in form and details may be made without departing from the spirit and scope of the claims. The foregoing embodiments and variations thereof may be combined and replaced with each other without deteriorating the intended functions of the present disclosure.

### INDUSTRIAL APPLICABILITY

As can be seen from the foregoing description, the present disclosure is useful for a heat exchanger.

### DESCRIPTION OF REFERENCE CHARACTERS

- 1: Heat Exchanger
- 20: Core Tube (First Metal Tube)
- 20a: Water Passage
- 30: Coiled Tube (Second Metal Tube)
- 30a: First Refrigerant Passage
- 30b: Second Refrigerant Passage
- J: Joint

## Claims

1. A heat exchanger (1) comprising:
a first metal tube (20);
a second metal tube (30); and
a metallic joint (J) made of a joint material molten and then solidified to join the first metal tube (20) and the second metal tube (30) together,
the heat exchanger (1) being configured to allow a fluid flowing through the first metal tube (20) to exchange heat with a fluid flowing through the second metal tube (30),
the joint (J) containing copper,
a melting temperature of the joint (J) being higher than an annealing temperature of the first and second metal tubes (20) and (30),
a tensile strength of the first and second metal tubes (20) and (30) being greater than a tensile strength of a metal tube with a temper designation "O."

2. The heat exchanger of claim 1, wherein
the joint material contains copper particles with a particle size of 1 µm or less, and
a melting temperature of the joint material is lower than the annealing temperature of the first and second metal tubes (20) and (30).

3. The heat exchanger of claim 1 or 2, wherein
the joint material contains tin.

4. The heat exchanger of any one of claims 1 to 3, wherein
the joint (J) has a void fraction of 30% or less by volume.
